# EUROPEAN PATENT APPLICATION

(11) **EP 1 457 862 A1**
(43) Date of publication of application: **15.09.2004**
(21) Application number: 03251439.0
(22) Date of filing: 11.03.2003
(51) Int. Cl.: G06F 1/16

(54) **Apparatus for composing and retrieving a text message**

(71) Applicant: AML Exceltech Limited, Fotan (HK)
(72) Inventor: Lun, Mok Kin, AML Exceltech Limited, Fotan (HK); Lun, Mok King, AML Exceltech Limited, Fotan (HK); Kwan, Chu Chi, AML Exceltech Limited, Fotan (HK)
(74) Representative: Banford, Paul Clifford

(57) **Abstract**

An apparatus for composing and receiving a text message transmitted across a telephone network comprises a handheld unit (1) for composing or displaying a text message and a cradle unit (9) for removably supporting the handheld unit. The handheld unit (1) includes a display (3) for displaying a text message; input keys (4) for use in composing a text message, a controller (7) with memory (8) for receiving and storing a text message, and a first optical communications interface (6). The cradle unit (9) includes a detector (15) for indicating when the handheld unit (1) is supported by the cradle (9), a fitting (10) for making a connection with a telephone network, a second optical communications interface (14) for communicating with the first optical communications interface (6) when the handheld unit (1) is supported by the cradle (9), and a controller (12) with memory (13) for receiving and storing or transferring a text message between the telephone network and the handheld unit (1).

## Description

The invention relates to apparatus for composing and retrieving text messages, and in particular to a handheld and portable apparatus for composing and retrieving Short Message Service (SMS) messages via the public switched telephone network.

Short Message Service (SMS), or Text, Messages have become very popular with mobile telephone and Personal Digital Assistant (PDA) uses. The short Message Service (SMS) allows the uses of portable devices to send and receive short email type text messages from almost anywhere in the world via a mobile telephone network. While the system is highly convenient it has the disadvantages of the relative high cost of the portable device (mobile phone or PDA), the requirement to have a subscription to a mobile telephone network and that data transmission may be interfered with by other radio frequency emitting sources.

Some telecom operators also provide a Short Message Service (SMS) via the public switched telephone network (PSTN). Using this service subscribers can send and receive SMS text Messages using their standard residential telephone line.

The advantage of using this system is that most households already have a fix connection to the telephone network. However, the system is not mobile and thus the user is required to be at the fix telephone connection in the same way as using a standard telephone.

It is an object of the present invention to provide a handheld and portable apparatus for composing and retrieving short message service messages via the public swith telephone network.

According to the invention there is provided an apparatus for composing and receiving a text message transmitted across a telephone network comprising:
(i) a handheld unit for composing or displaying a text message including
   a display for displaying a text message,
   text input keys for use in composing a text message,
   a controller with memory for receiving and storing a text message, and
   a first optical communications interface,
(ii) a cradle unit for removably supporting the handheld unit including
   a detector for indicating when the handheld unit is supported by the cradle,
   a fitting for making a connection with a telephone network,
   a second optical communications interface for communicating with the first optical communications interface when the handheld unit is supported by the cradle, and
   a controller with memory for receiving and storing or transferring a text message between the telephone network and the handheld unit.

Preferably, the cradle controller stores a text message from the telephone network in the cradle memory when the handheld unit is not supported by the cradle.

Preferably, the text message stored in the cradle memory is transmitted to the handheld unit when the handheld unit is supported on the cradle.

Preferably, the portable unit controller stores a composed text message in the handheld unit memory when the portable unit is not supported by the cradle.

Preferably the text message composed and stored in the handheld unit memory is transmitted to the telephone network when the handheld unit is supported on the cradle.

Preferably, the detector activates the first and second optical communications interfaces when the handheld-unit is supported on the cradle.

Preferably, the cradle further includes an indicator for indicating that a text message is stored in the cradle memory.

Further-aspects of the invention will become apparent from the following description, which is given by way of example only and with reference to the accompanying drawings in which:
Figure 1 illustrates a handheld unit for composing and receiving a text message,
Figure 2 is a rear perspective view of the unit in figure 1.

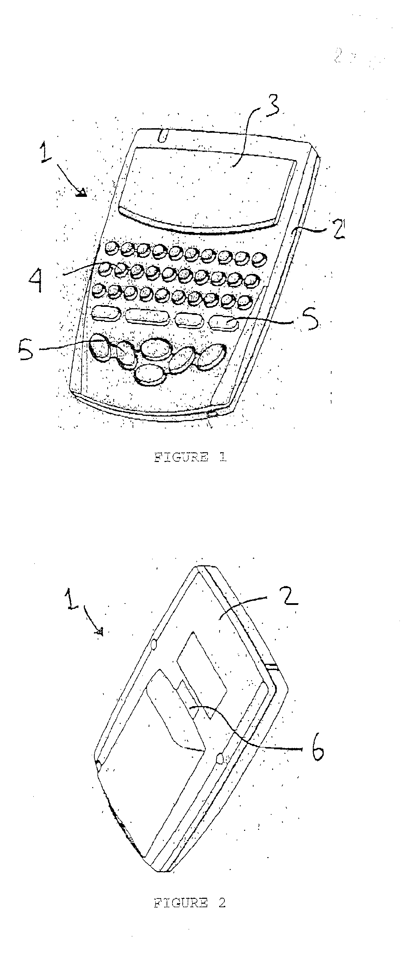

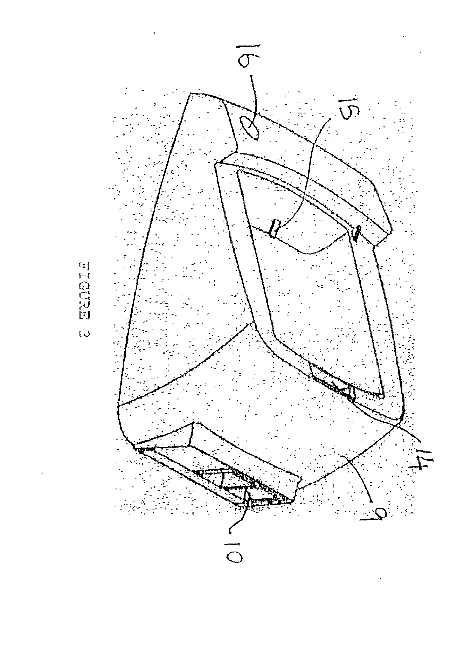

Figure 2 is a cradle for receiving the unit of figure 1 and connecting to a public switch telephone network,

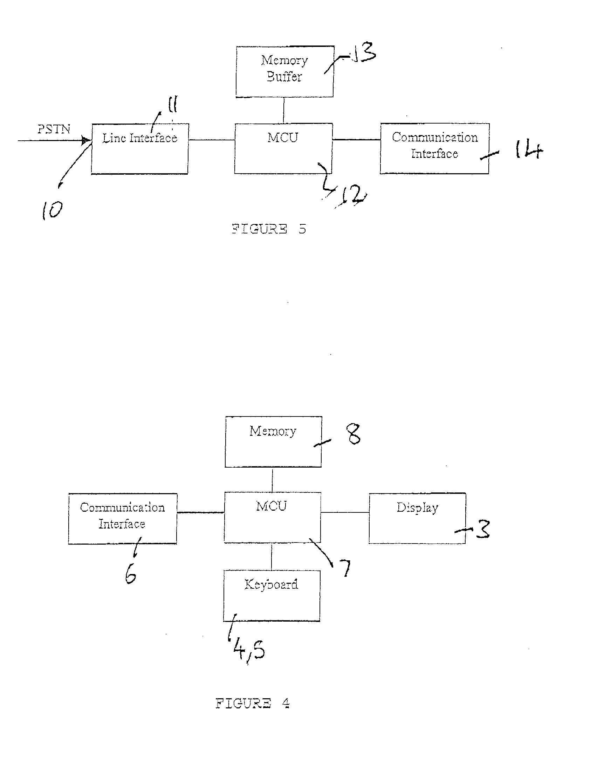

Figure 4 is a block diagram of the unit of figure 1,

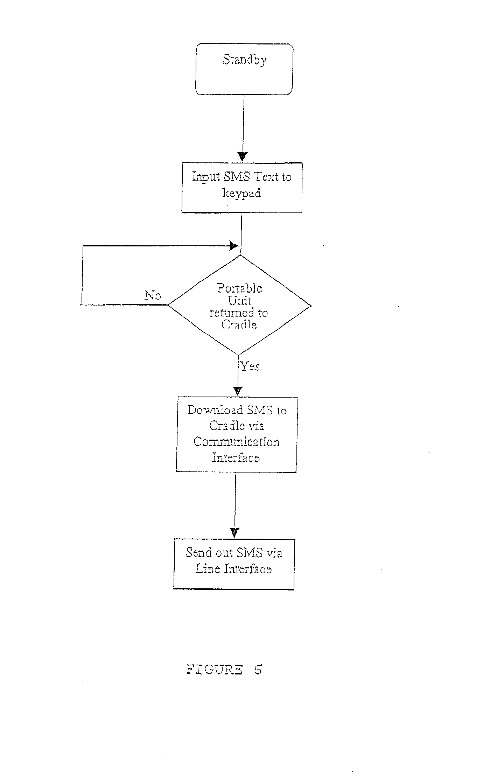

Figure 5 is a block diagram of the cradle,

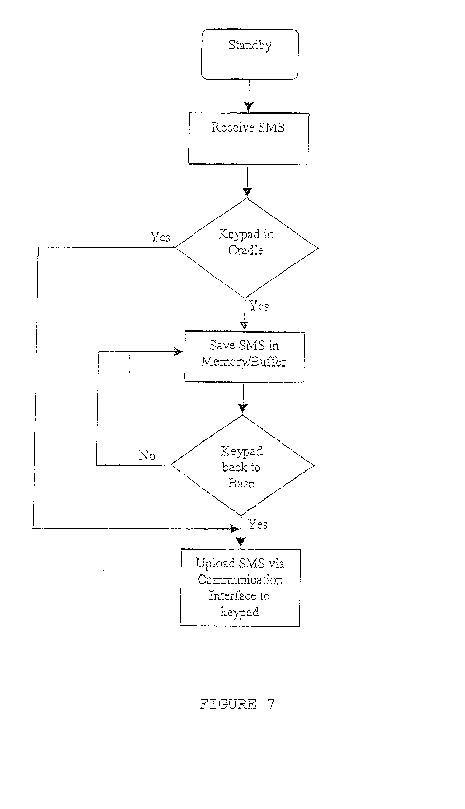

Figure 6 is a flow diagram of the steps of composing a text message,
Figure 7 is a flow diagram of the steps for receiving a text message.

Referring to Figures 1 to 3 an apparatus for composing and receiving *a* text message comprises a portable handheld unit 1 and a cradle 9 for supporting the handheld unit 1.

The handheld unit 1 is used to composing a new text message or displaying a received text message. In comprises a housing 2 with an LCD display 3 on an upper front portion for displaying a text message and a alphanumeric keypad 4 below the display for inputting text when composing a text message. Control buttons 5 provide an interface for manipulating composed or received text messages on the display 3 or in memory. The handheld unit 1 also includes a first optical communications interface 6 on its back side. The LCD display 3, keypad 4, 5 and optical controller 6 are connected to a controller 7 with memory 8. Battsries provide power to the controller 7, optical communication interface 6 and display 3.

The cradle unit 9 removably supports the handheld unit 1 in known manner. Its has a fitting 10 and line interface 11 for making a connection with a telephone network (not shown). A cradle controller 12 with memory 13 receives and stores or transfers a text message between the telephone network and the handheld unit 1. A second optical communications interface 14 is provided on the cradle 9 for communicating with the first optical communications interface 6 when the handheld unit 1 is supported by the cradle 9. A micro-switch 15 on the cradle 9 indicates when the handheld unit 1 is supported by the cradle 9. The cradle 9 also includes an indicator LED 16 for indicating that a text message has been received and stored in the cradle memory 13.

The cradle controller 12 controls the communications (message and information flow) between it and the memory 13, between it and the portable unit controller 7 and between, it and the telephone network. When the portable unit 1 is not supported by the cradle 9 the memory buffer 13 stores any incoming text message from the telephone network until the message can be uploaded to the portable unit 1 when the portable unit is placed on the cradle 9.

Referring to Figure 7 When the cradle controller 12 receives an incoming message from the line interface 11 it checks to see whether an input from the detector 15 indicates that the portable unit 1 is on the cradle 9. If not the incoming text message is stored in the memory 13 in the cradle 9. The indicator LED 16 is illuminated to indicate that there is new text message stored in the memory 13. This informs the user to upload the text message from the memory 13 in the cradle unit 9 to the memory 8 in the portable unit 1 by placing the portable unit 1 on the cradle 9. If the portable unit 1 is supported on the cradle 9 when the text message is received the cradle controller 12 transfers the incoming text message to the portable unit controller 7 directly without storage in the cradle memory buffer 13.

The communication between the telephone network and the controller 12 in the cradle 9 is provided by the line interface 11. The cradle 9 sends and receives Short Message Service (SMS) text messages over the telephone network using the European Telecommunications Standards Institute (ETSI) Standard ES201 912.

ES201 912 specifies protocols to provide an SMS service on the fixed telephone network. SMS messages are transported via a Short Message Service Center using a normal voice band call on the telephone network. More information on the standard is available from the ESTI website at http: //www. etsi. org/.

The micro-switch 15 activates Optical communication between the controller 7 in the portable unit 1 and the controller 12 in the cradle 9. The optical transceiver in the cradle 3 transmits any text messages to the optical transceiver in the portable unit 1. Conversely, the optical transceiver in the portable unit 1 transmits any text message composed on the portable unit to the optical transceiver in the cradle 9. The text message is then transmitted to the telephone network via a the line interface 11 in the cradle 3. The optical transceiver in the cradle 9 also transmits caller ID information to the optical transceiver in the portable unit 1.

The portable unit controller 7 controls communication between itself and the cradle controller 12. when the portable unit 1 is placed on the cradle, text message stored in the cradle memory 13 and any incoming text message from the telephone network are transmitted to the portable unit and stored in memory 8. They can then be selectively displayed on the display 3,

Referring to Figure 6, when a message is composed on the portable unit 1 by the user it is stored in the portable unit memory 8 until the portable unit 1 is placed on the cradle 9. While being composed on the keypad 4 the text message is displayed in the display 2. The text message is transmitted to the cradle 9 when the portable unit 1 is placed on the cradle 9. If the portable unit 1 is on the cradle 9 when the user is composing the text message the message is transmitted out to the telephone network immediately after it has been completed.

The advantages of this apparatus are these. The portable unit is portable such that the user can compose a new text message or read a received text messages stored in the portable unit in any place. The cradle controller stores a test message from the telephone network in the cradle memory when the handheld unit is not supported by the cradle. There is no physical connection between the portable unit and the cradle. It is user-friendly and convenient to use. The cost of the unit is lower than the wireless text messaging devices such as mobile phone or PDA.

## Claims

1. Apparatus for composing and receiving a text message transmitted across a telephone network comprising:
(i) a handheld unit for composing or displaying a text message including
a display for displaying a text message
text input keys for use in composing a text message,
a controller with memory for receiving and storing a text message, and
a first optical communications interface,
(ii) a cradle unit for removably supporting the handheld unit including
a detector for indicating when the handheld unit is supported by the cradle,
a fitting for making a connection with a telephone network,
a second optical communications interface for communicating with the first optical communications interface when the handheld unit is supported by the cradle, and
a controller with memory for receiving and storing or transferring a text message between the telephone network and the handheld unit.

2. The apparatus of claim 1 wherein the cradle controller stores a text message received from the telephone network in the cradle memory when the handheld unit is not supported by the cradle.

3. , The apparatus of claim 2 wherein the text message stored in the cradle memory is transmitted to the handheld unit when the handheld unit is supported on the cradle.

4. The apparatus of claim 1 wherein the portable unit controller stores a composed text message in the handheld unit memory when the portable unit is not supported by the cradle.

5. The apparatus of claim 4 wherein the text message stored in the Handheld unit memory is transmitted to the telephone network when the handheld unit is supported on the cradle.

6. The apparatus of claim 1 wherein the detector activates the first and second optical communications interfaces when the handheld unit is supported on the cradle.

7. The apparatus of claim 1 wherein the cradle further includes an indicator for indicating that a text message is stored in the cradle memory.
